**Europäisches Patentamt**

(19) **European Patent Office**

**Office européen des brevets**

(11) Publication number : **0 385 919 B1**

(12) **EUROPEAN PATENT SPECIFICATION**

(45) Date of publication of patent specification : **26.01.94 Bulletin 94/04**

(51) Int. Cl.⁵ : **B29C 33/64,** B29C 33/40, B29C 35/02, // B29L30/00

(21) Application number : **90630052.0**

(22) Date of filing : **23.02.90**

(54) **Treated tire curing bladders and method for curing tires.**

(30) Priority : **01.03.89 US 317419**

(43) Date of publication of application : **05.09.90 Bulletin 90/36**

(45) Publication of the grant of the patent : **26.01.94 Bulletin 94/04**

(84) Designated Contracting States : **DE FR GB IT**

(56) References cited :
EP-A- 0 111 100
EP-A- 0 160 537
EP-A- 0 206 314
US-A- 3 758 441
US-A- 4 547 544
US-A- 4 554 122

(73) Proprietor : **THE GOODYEAR TIRE & RUBBER COMPANY**
**1144 East Market Street**
**Akron, Ohio 44316-0001 (US)**

(72) Inventor : **Oliver, Brian Horsham**
**957 Hampton Ridge Drive**
**Akron, Ohio 44313 (US)**

(74) Representative : **Leitz, Paul**
**Goodyear Technical Center-Luxembourg**
**L-7750 Colmar-Berg (LU)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 385 919 B1

## Description

Field of the Invention

This invention relates to a tire curing bladder having a base release coat and a lubricant topcoat on its outer surface and a method of curing tires utilizing such a coated bladder.

Background of the Invention

Conventionally, pneumatic rubber vehicle tires are produced by molding and curing a green, or uncured and unshaped, tire in a molding press in which the green tire is pressed outwardly against a mold surface by means of an inner fluid expandable bladder. By this method the green tire is shaped against the outer mold surface which defines the tire's tread pattern and configuration of sidewalls. By application of heat and pressure, the tire is cured at elevated temperatures.

In general practice, the expansion of the bladder is accomplished by application of internal pressure to the inner bladder cavity which is provided by a fluid such as hot gas, hot water and/or steam which also participates in the transfer of heat for the curing or vulcanization of the tire.

The tire is then conventionally allowed to cool somewhat in the mold, sometimes aided by adding cold or cooler water to the bladder. Then the mold is opened, the bladder collapsed by removal of its internal fluid pressure and the tire removed from the tire mold. Such use of the tire curing bladders is well known to those having skill in such art.

It is recognized that there is a substantial relative movement between the outer contacting surface of the bladder and the inner surface of the tire during the expansion phase of the bladder. Likewise there is also a considerable relative movement between the outer contacting surface of the bladder and the cured inner surface of the tire after the tire has been molded and vulcanized during the collapse and the stripping of the bladder from the tire.

Unless adequate lubrication is provided between the bladder and the inner surface of the tire, there is typically a tendency for the bladder to buckle, resulting in a misshaping of the tire in the mold and also excessive wear and roughening of the bladder surface itself. Also, the bladder surface can tend to stick to a tire's inner surface after the tire is cured and during the bladder collapsing part of the tire cure cycle. Further, air bubbles can potentially become trapped between the bladder and tire surfaces and promote tire vulcanizing defects due to lack of adequate heat transfer.

For this reason, it is a conventional practice to precoat the inner surface of the green or uncured tire with a lubricant in order to provide lubricity between the outer bladder surface and inner tire surface during the tire shaping and molding operation. Sometimes the lubricant has been called a lining cement.

Conventionally, the inner surface of the green tire, which is typically a rubber gum stock, is simply coated with a lubricant which might, for example, be based upon a silicone polymer. Various silicone materials are well known release agents and some are useful in the tire curing operation. Other additives may also conventionally be utilized in the lubricant composition such as mica, polymeric polyols, cellulose ethers and clay such as bentonite clay. Some lubricants are solvent based and some are water based. Often aqueous soap solutions are utilized. Many lubricant compositions have been taught in the art for such purposes.

The coating of substrates with various silicone products to add lubricity is well known. In other words, many silicone products are well known to act as lubricants and to impart lubricity to various surfaces. The term silicone, while a rather indefinite term in itself, usually denotes a polymeric material, usually composed of, at least in part, a polysiloxane.

Some silicone products are mixtures of materials referred to as room temperature vulcanizing silicone materials which are often referred to or abbreviated as RTV's and rely upon moisture (e.g. moisture in the air) to cause their curing reaction to proceed. Some RTV's are also referred to as RTV-I's which usually means that they are provided to the user as a premixed composition, thus being a one component (mixture) RTV which then cures upon being exposed to moisture.

RTV's of many and various compositions have been formulated for many and various purposes, including molding and coating purposes.

For an example, it has been taught to prepare an RTV by admixing and storing in substantial absence of moisture (a) an essentially linear polyorganosiloxane having chemically reactive end groups with (b) an aminoorganosilane having at least three hydrolyzable groups per silane molecule (e.g. amino groups bonded to the silicone through the Si-N linkage). Such a composition might be referred to as an amino RTV or RTV-I. Such RTV's might be more fully described, for example, in U.S. Patents 3,032,528; 3,280,072; 3,408,325; 3,464,951; 3,560,422; 3,647,725; 3,678,003; 3,674,738; 3,758,441; and 4,100,124. Some of the RTV's are taught to have release properties.

In another aspect, it has been taught to provide lubrication for chlorobutyl rubber by treating it with a solvent solution of a silicone in which the solvent is thought to swell the rubber and enable the silicone to penetrate and form a thin film of silicone oil on the surface. (French Patent No. 1,426,446)

Numerous other patent disclosures teach the lubrication of rubber surfaces with various silicone compositions, some for tire cure bladders, some relying upon curing the silicone on the rubber or bladder surface such as for example: U.S. Re 32,318; U.S. 3,532,624; 3,872,038; 3,883,628; 3,905,823; 4,043,924; 4,066,560; 4,178,257; 4,244,742; 4,431,452; 4,509,984, 4,554,122; British 1,476,657 and EPO Application Nos. 111,100 and 160,537.

In another aspect, it has been taught to provide a lubrication coating of a silicone product on a bladder with the bladder itself being in an expanded condition during the coating operation. (U.S. Patent Re 32,318)

Indeed, it has been disclosed in at least one industry publication as early as 1954 to coat tire cure bladders with a silicone product to enable a multiple or series of repetitive tire cures thereon before necessitating additional application of the silicone to the bladder surface. (Rubber Age, Volume 76, No. 2, November, 1954.)

However, it is to be appreciated that the release of a tire from its cure bladder in an industrial manufacturing setting is intimately associated with both the phenomenon of release (to prevent sticking) and the phenomenon of lubrication (to enhance slipping) between the bladder and adjacent tire surfaces. The release aspect refers to the basic ability to non-stick, or release and the aspect of lubrication relates to enhancing the ability of the relative surfaces to slip and enable a relative movement of the bladder is provided and tire surfaces.

Accordingly, it is desired to provide a coated tire cure bladder and method of curing tires with such considerations in mind.

Disclosure and Practice of Invention

In accordance with this invention, a method of treating a cured butyl rubber expandable tire cure bladder which comprises the steps of

(A) expanding said bladder outwardly at least about fifteen percent from its normal collapsed condition.

(B) forming a base release coat on said bladder by applying at least one coating to the outer surface of said expanded bladder of an organic solvent solution of a composite mixture and at least partially drying and curing said composite in situ on said surface in the bladder's expanded condition, wherein said solution is comprised of an organic solvent for said composite and the composite mixture comprised essentially of:

    (1) an essentially linear hydroxyl terminated polyorganosiloxane; and

    (2) an aminoorganosilane having the general formula:

$$R_nSiX_{(4-n)}$$

where n is 0 or 1; R is an alkyl radical having 1 to 4 carbon atoms; X is an amino radical having the general formula:

$$-NH_yR'(2-y)$$

where y is 0 or 1; and R' is selected from at least one of saturated alkyl radicals having from 3 to 6 carbon atoms and a cyclohexyl radical;

(C) collapsing said bladder,

(D) allowing said base release coat to further dry and cure in situ on said bladder surface,

(E) Subsequently forming a lubricant topcoat over said cured base release coat by applying a coating of an emulsion of a lubricant composite thereover with said bladder being in either a collapsed or expanded condition and drying said emulsion, wherein said emulsion is comprised of an emulsion of at least one of:

    (1) emulsion A as a polydimethylsiloxane fluid having a viscosity at 20°C in the range of 0,3 to 0,6 Pa.s (300 to 500 centipoise),

    (2) emulsion B as an hydroxyl terminated polydimethylsiloxane having a viscosity at 25°C in the range of 12 000 Pa.s to 28 000 Pa.s (12 million to 28 million centipoise), optionally containing a polydimethylsiloxane fluid having a viscosity at 25°C. in the range of 0,3 to 0,6 Pa.s (300 to 600 centipoise),

    (3) emulsion C as a mixture of an hydroxyl terminated polydimethylsiloxane having a viscosity at 25°C. of about 1200 million to about 2800 million g/m.s (about 12 million to about 28 million centipoise) and a methylhydrogen polysiloxane having a viscosity at 25°C. in the range of 0,005 to 0,05 (5 to 50 centipoise) and

    (4) emulsion D as a mixture of a polydimethylsiloxane having an hydroxyl terminated viscosity at 25°C. in the range of 12 000 to 28 000 Pa.s (12 million to 28 million centipoise), a methyl hydrogenpolysiloxane having a viscosity at 25°C. in the range of 0,005 0,05 Pa.s (5 to 50 centipoise) and an acrylic copolymer derived from the polymerization of acrylonitrile and at least one of methyl acrylate and ethyl acrylate.

In further accordance with this invention, a cured butyl rubber expandable tire cure bladder is provided which is prepared according to such method.

In the practice of this invention, the lubricant composites of emulsions C and D cure in situ on the said cured base release coat.

In further accordance with this invention, a method of curing a pneumatic rubber tire is provided which comprises the steps of:

(A) inserting a green, uncured rubber tire into a suitable open tire cure mold having an expandable cured butyl rubber tire cure bladder positioned therein,

(B) closing the mold and expanding said bladder by application of heated fluid to the bladder cavity to expand the bladder outwardly against the inner surface of the green tire to force said tire outward against the mold surface,

(C) curing the tire under conditions of heat and pressure, and

(D) opening the mold, collapsing the bladder by reducing the fluid pressure within its cavity and removing the shaped, cured tire from said mold.

wherein said bladder has a cured base release coat on its outer surface and a lubricant topcoat thereover prepared according to the method of this invention.

Thus, the method of curing such tire is characterized by utilizing the tire cure bladder of this invention.

In further accordance with this invention, such method of curing the tire is provided where said lubricant topcoat is applied to said cured base release coat prior to curing a pneumatic tire therewith and subsequently intermittently thereafter only necessarily after at least 8 sequential, repetitive tire cure cycles. (Usually at least 20 or more cycles, particularly for emulsions C and D)

It is to be appreciated that, for the lubricant coat, emulsions A, B, C and D can be alternately applied during such tire cure cycles. Thus, for example, emulsion A or B could be first applied with the next sequential emulsion coat being that of emulsion C or D; or vice versa.

It is to be further appreciated that the cured base release coat can be coated with the lubricant coat by direct application of the lubricant composition emulsion to the bladder or applied optionally alternatively indirectly by application of the lubricant composition emulsion to at least a portion of the inside surface of the uncured tire to be cured thereby and allowing such coated tire surface to transfer a portion of the lubricant composition to the base release coat on the bladder as the tire is positioned and cured in the mold.

In one aspect relating to the above, optionally, only a portion, namely, the bead portion of the tire may be coated with the lubricant composition prior to curing the tire.

Again, it is to be appreciated that in the practice of this invention, it is intended that such lubricant composition be only intermittently made during a sequential series of tire cure cycles.

For the base release composition, preferably R is a methyl or ethyl radical and R' is a butyl radical and R' is more preferably an n-butyl radical. Preferably n is 1. It is usually preferably for y to be 0. It is acknowledged that a silane of such general description may be prepared where R is an aryl radical (e.g. phenyl) and that a silane of such general description may be prepared where R' is an ethyl radical or that the amine radical is aniline or methyl aniline.

For the hydroxyl terminated polyorganosiloxane, it is preferred that it is a polydimethylsiloxane. By the term "hydroxyl terminated" it is meant that the polymer has hydroxyl radicals located on its ends. Generally, it may be thought of as a dihydroxy-polydimethylsiloxane. It is recognizable that, in some instances, it may be desirable to provide the polysiloxane as having end groups that are readily hydrolyzable in the presence of water to form the required hydroxyl groups. The hydroxyl terminated polyorganosiloxane may have at least 50 siloxane units and prospectively up to 5000 or more of such units. Such chemistry is readily known to those having skill in such art.

For the prescribed base release mixture and emulsions C and D mixtures, preferably substantially or approximately stoichiometric amounts are preferred.

The application of the base release coat to the bladder surface is suitably accomplished by an organic solvent solution or dispersion of the composition. For example, such solution or dispersion for such application may contain 75 to 90, preferably 80 to 90 weight percent solvent, (equating to from 10 to 25, preferably 10 to 20 weight percent solids based on the solids as being the coating composition), which, after application to the bladder, is dried by evaporation. Certainly more or less solvent could be used, depending somewhat upon the extent of dilution desired. Representative examples of various solvents for such purpose are organic solvents such as toluene, xylene, tetrachloroethylene, and 1,1,1-trichloroethane.

In practice, the rubber for the bladder is typically a butyl rubber (copolymer of isobutylene with a minor amount of isoprene). By the term butyl, it is intended herein to also mean various modified basic butyl rubbers such as halogen-substituted butyl rubbers which may be, for example, chlorobutyl or bromobutyl rubber. The butyl rubber bladder is typically cured with what is generally referred to as a resin cure as opposed to sulfur cure systems. A resorcinol/formaldehyde resin cure system is often used for such purpose. Such bladder compositions and cure systems are well known to those having skill in such art. For an example see U.S. Patent No. 3,031,423.

Typically, the butyl rubber for use in tire cure bladders is also compounded or mixed with additional migratable materials which might serve, to some extent, as surface lubricants as they tend to migrate to the surface of the bladder over a period of time. For example, see U.S. Patent No. 3,031,423. In the practice of this invention, it is preferred that the compounded butyl rubber contains less than about 15 and preferably less than about 5 parts by weight per 100 parts by weight rubber (phr) of migratable materials such as castor oil and petroleum waxes.

In the practice of this invention, it is required that the bladder be coated with the base release composition in its expanded condition. Indeed, it has been observed that less than effective adherent coatings have resulted when coating the bladder in a non-expanded condition. While this phenomenon might not be entirely understood, it should be appreciated that the surface of a cured compounded rubber normally contains microscopically small pores - probably due in part to the compounded rubber itself being composed of a mixture of somewhat discrete, discontinuous materials with an attendant surface effect. Upon expanding the bladder, preferably at least 20%, it is envisioned that such pores may tend to be more exposed by somewhat opening up or enlarging to be more receptive to the applied solvent solution or dispersion of the coating composition, thus, enabling what might be thought of as a quasi physical bonding or locking effect upon the curing of the base release composition, particularly when the bladder is subsequently collapsed. The term "collapsed" relative to the bladder treatment described herein is used to describe the bladder in its normal, deflated condition with essentially equal (atmospheric) pressure within and without its cavity.

In addition, it is envisioned that the outer surface of the bladder in its expanded condition is under a degree of tension and, thus, more readily susceptible to potential swelling and penetrating effects of the solvent itself, even if only for a few brief moments, which may enable the composition to marginally penetrate the rubber, including minutely exposed pore surfaces thereof, and enabling a more intimate contact with various compounding ingredients, contained within the butyl rubber, including the conventionally utilized resorcinol/formaldehyde resin cure adduct for the butyl itself, to enable a quasi-chemical/physical bonding effect as the base release coating composition proceeds to chemically cure in situ on the expanded bladder surface.

Air bleed between the bladder surface and the tire surface is necessary to prevent surface defects in the cured tire. While the lubricity of the coating(s) utilized by this invention may promote such air bleed, the texture of the bladder surface is more effectively relied on for such purpose. In this regard, the bladder surface is provided as being appropriately grooved and/or textured. Such practice is well known to those having skill in such art.

The mixture used for the base release coating composition, particularly as applied as a thin coating, is relatively fast reacting or curing. In a few moments a polymeric skin or film has often been observed to form under conditions of relative humidity in the range of 30 to 70 percent and ambient temperature in the range of 17 to 27°C. Because the mixture relies on moisture to cure and, thus, exposure to the atmosphere, an excessive skinning effect may be potentially detrimental in the coating operation by tending to excessively "protect" the mixture beneath the skin, or film, from efficient exposure to moisture in the air. Such effect might occur if the ambient relative humidity and/or temperature are too high. It is considered that, under such undesirable condition, it may be possible that other miscellaneous competing reactions or a reaction retardance may take place. Thus, appropriately, the atmospheric relative humidity and ambient temperature are important factors as well as, to some degree, the concentration of the composition in the solvent and the thickness of the applied layer. Indeed, it has been observed to be desirable to apply several thin coats rather than a single coat to more effectively promote the evaporation of the solvent and at least partially cure the coating film.

In this described environment, it is seen that it is important to match the receptiveness of the bladder surface to the characteristic of the relative fast curing and solvent-containing base release coat mixture coupled with its inherent in situ moisture curing mechanism.

It has been observed that such match was reasonably accomplished with presenting the bladder in its described expanded condition with its exposed tensioned surface and potentially active sites, to the application of the relatively fast curing thin coats of the prescribed base coat mixture. It has been observed that application of the base coat composition to an unexpanded, cured butyl rubber surface did not yield a satisfactorily adherent cured coating of the base release composition.

In order to effect a reasonable series of sequentially, repetitive tire cures, it has been found to be necessary to initially coat the base release coat on the bladder surface with the lubricant coat and, further, to then intermittently apply subsequent coats of the lubricant coat to the coated bladder surface between the repetitive tire cures. Thus, the term "necessary" relates to lubricant coatings which become necessary to enable or maintain a suitable "slip" between the relative bladder and tire surfaces. Such additional lubricant coating frequency can be, for example, in the range of 8 to 40 or even considerably more tire cures. Such additional lubricant coatings can be suitably accomplished by direct application to the bladder surface or by indirect application through application to at least a part of the inner surface of the tire to be cured.

Thus, it is an important aspect of this invention that an initial base release coated bladder is provided having a durable release characteristic which is to be coupled with the subsequent, intermittent application of the lubricant coating.

As hereinbefore pointed out, it is important to appreciate the contributions of the initially applied base release coat and the subsequently and intermittently applied lubricant overcoat.

It has been observed that such practice of application of dual coats is substantially more effective than premixing the base release composition and subsequent lubricant composition together for application as a mixture as a first or base coat onto the bladder surface.

Indeed, it is to be appreciated that it is intended that the base release coat composition be applied to the bladder surface without containing a polyorganosiloxane polymer. The term, polyorganosiloxane polymer, is intended to describe such polymers unsubstituted with reactive radicals and, thus, are relatively inert. In a preferred aspect, however, it is preferred that the composition is limited to the reactive materials as described.

The prescribed initial base coating has, as pointed out, been observed to provide a durable release coating. However, as pointed out, it also has been observed to be somewhat deficient in a lubricity quality (sometimes referred to as a slip quality). Thus, for the coated bladder to function successfully in a tire cure environment, lubricity is to be added as the additional lubricant coat.

In practice, the combination of the cured base release coat applied by the prescribed method taken with the applied lubricant topcoat have been observed to enable a more efficient tire cure operation, particularly regarding the relative movement and the release of the surfaces of the bladder and the inner tire surface for a sequential series of tire cure cycles. A longer lasting and more durable lubricant coat was observed when applied over the cured base release coat without necessitating a reapplication of the base release coat itself - usually for the useful life of the bladder. Fewer applications of the lubricant coat were needed to effect an adequate lubrication of the bladder as compared to a bladder without the base release coat.

A purpose of the intermittent application of the lubricant composition to the tire itself is to transfer a degree of transient lubricity to the cured base release coated bladder surface to make the lubrication of the relative surfaces of the bladder and the tire during the tire molding and curing cycle more tolerant and forgiving of variances in the tire curing operation.

The practice of this invention is further illustrated by reference to the following example which is intended to be representative rather than restrictive of the scope of the invention. Unless otherwise indicated, all parts and percentages are by weight.

EXAMPLE I

A release composition was prepared according to the following recipe described in Table 1.

## Table 1

| Material | Parts |
|---|---|
| Moisture curable silicone composition solution (40% solids)[1] | 50 |
| Toluene | 50 |

1.  A mixture of hydroxyl terminated polyorganosiloxane and aminoorganosilane in tetrachloroethylene solvent (40% solids) obtained as Elastosil A314 from Wacker Chemie, where R' is an n-butyl radical.

A lubricant composition emulsion (A) is prepared according to the recipe described in Table 2.

## Table 2

| Material | Parts |
|---|---|
| Polydimethylsiloxane emulsion (35% solids)[1] | 50 |
| Water | 50 |

1. A 35% emulsion of a polydimethylsiloxane fluid having a viscosity at 20°C. of about 0,35 to 0,4 Pa.s (350-400 centipoise) obtained as DC 36 from Dow Corning.

A lubricant composition emulsion (B) is prepared according to the recipe described in Table 3:

## Table 3

| Material | Parts |
|---|---|
| Polydimethylsiloxane, hydroxyl capped, emulsion[1] | 20 |
| Water | 120 |
| Polydimethylsiloxane (optional)[2] | 10 |

1. A polysiloxane (hydroxyl capped) as described in the following Table 4.

2. A polysiloxane as described in Table 2.

An additional lubricant composition emulsion (C) is prepared according to the recipe described shown in Table 4.

## Table 4

| Material | Parts |
| --- | --- |
| Polydimethylsiloxane, hydroxyl capped[1] | 40 |
| Methyl hydrogen polysiloxane[2] | 175 |
| Defoamer[3] | 1 |
| Water | 610 |

1. A polysiloxane (hydroxvl capped) having a viscosity in the range of about 18000-22000 Pa.s (18-22 million centipoise) as a water concentrate (about 80 percent solids) containing about 30 parts of the siloxane and about 10 parts surfactant therefor obtained as DC 3289 from The Dow Corning Company.

2. Understood to be a water concentrate containing about 30 parts of methyl hydrogen siloxane having a viscosity of about 0,02-0,03 Pa.s (20-30 centipoise) at 25°C. obtained as Repellotex 402 from the Lyndal Chemical Company.

3. A polysiloxane emulsion.

An additional lubricant composition emulsion (D) is prepared according to the recipe of Table 4 except that the methylhydrogen polysiloxane concentrate is reduced to about 80 parts, a thickener added (1-2 parts) and about 50 parts added of an acrylic copolymer understood to be derived from acrylonitrile and at least one of methyl acrylate and ethyl acrylate obtained as Karalease STS from the Lyndal Chemical Company.

A cured butyl rubber radial tire cure bladder was obtained of the type and shape for curing a 195/75R14 radial ply pneumatic rubber passenger tire. The butyl rubber had been prepared with a resorcinol/formaldehyde resin cure system and contained about 11 parts per 100 parts by weight rubber (phr) of castor oil (6 parts) and microcrystalline wax (5 parts).

The toroidally shaped bladder had open end diameters of about (12 inches) 30 cm (the bladder's ends are open unless mounted such as in the tire cure mold or during the base release coating operation) and a mid-diameter of about (22 inches) 56 cm at its midsection and a gauge (wall) thickness of about (0.25 inches) 0,64 cm. Its outer surface was textured with a pebble-like appearance.

The bladder was mounted on an apparatus which effectively closed its circular ends to create an enclosed cavity by the bladder.

Air pressure was applied to the enclosed bladder cavity to expand its mid-diameter about 25 percent. This is a measure of the bladder expansion since its ends are fixed and do not expand.

The solution of the base release composition (Table 1) was charged to a spray apparatus and was manually sprayed onto the bladder surface as the bladder was caused to rotate about its longitudinal axis (through its circular ends).

The ambient temperature was about 16-27°C. and the ambient relative humidity was about 50-70 percent.

The release composition solution was sprayed onto the expanded bladder surface in successive thin layers

8

over a period of 1-2 minutes to a cumulative amount of about 0.007 grams per square centimeter of the base release composition.

It was observed that the solvent appeared to substantially immediately evaporate from the bladder surface while the release composition appeared to cure to a glossy or shinny appearance.

After about a minute following the application of the base release coat, the air pressure was removed from the bladder cavity, allowing the bladder to deflate and collapse to its normal shape.

The coated bladder was set aside to allow the base release coat to further dry and cure for about 1-2 hours.

Prior to then utilizing the bladder to cure a tire, an initial lubricant coating is applied to individual bladders having the prescribed cure base release coat thereon of lubricant composition emulsions A, B, C and D, respectively. The said initial lubricant coatings are applied directly to the base release coat of the bladders and allowed to dry to leave a lubricant surface. Lubricant coating compositions C and D are allowed to cure in situ on the respective surfaces.

The thus coated bladders are mounted in a tire cure mold and a series of tires molded and cured thereby.

Thereafter, the lubricant composition is applied to only after about every 8th to 40th sequential tire in the tire curing operation. In one aspect, at least about 100 cures are obtained for bladders which had been topcoated with the emulsion compositions C and D and used to cure light truck tires.

Upon spraying the base release composition mixture onto the expanded bladder surface having a temperature in the range of about 16-27°C., the mixture apparently reacts relatively immediately with the moisture in the air to form at least a partially cured silicone polymer in situ on the surface of the bladder. For such purpose the ambient humidity is about 30 to 70 percent relative.

The surface of the cured butyl bladder is previously cleaned by washing with toluene, followed by drying, to remove surface oils, waxes and the like.

In the tire cure operation, the tire is placed in a tire mold press and the coated bladder, attached to the mold, positioned inside the tire. The mold is closed and the bladder expanded by steam at a temperature of about 190°C. to force it against the inside surface of the tire and press the tire outwardly against the outer mold surface so that the tire was shaped as desired and cured.

The mold was then opened, the bladder collapsed and the tire removed therefrom.

In another aspect, the lubricant composition is applied to the inner surface of the uncured tire instead of directly to the bladder surface. In some instances, the lubricant emulsion is applied only to the bead area of the uncured tire.

It is recognized that the inner surface of the tire is typically a compounded rubber gum stock which can be of various rubber or their mixtures such as, for example, natural rubber, cis 1,4-polyisoprene, cis 1,4-polybutadiene, butadiene-styrene copolymer, butyl rubber, holobutyl rubber such as chlorobutyl and bromobutyl and EPDM (ethylene-propylene-minor amount of diene terpolymer).

In this example, preparation of a radial ply tire is exemplified. Although the invention can sometimes be considered to be more adaptable to radial ply rather than to bias ply tire production because the bladders are generally required to expand more during a bias ply tire cure cycle, thereby stressing the bladder's surface coat, it is considered that the invention is generally readily adaptable to bias ply tire production.

It is important to appreciate that the tire in this Example is cured by expanding the multiple coated bladder directly against the inner gum stock surface of the tire to press the tire outward under conditions of heat and pressure to shape and cure the tire. Thus, the lubricant coated base release coat of the bladder effectively enables the preparation of the tire without a constant application of a lubricant coating or liner cement, on the inner surface of each green tire without a reapplication of the base release coat itself. This is considered significant since it adequately demonstrated that the coated bladder of this invention provides adequate lubrication for a considerable series of sequential tire cure cycles under conditions of heat and pressure, expansion and contraction without the conventional, attendant tire liner cement, or lubricant, precoated on the inside surface of each and every tire. Although it is appreciated that a lubricant precoat could be used on the inner surface of each and every green tire, if desired, in conjunction with the coated bladder, it is considered important that this Example demonstrated that it was not required.

Indeed, it is considered that the bladder having the cured base release coat prepared by the method shown in this Example combined with the intermittently applied lubricant topcoat provides a more efficient tire cure cycle operation in a substantially beneficial manner as described in the accompanying specification.

## Claims

1.     A method of treating a cured butyl rubber expandable tire cure bladder characterized in that it comprises the steps of

(A) expanding said bladder outwardly at least about fifteen percent from its normal collapsed condition,

(B) forming a base release coat on said bladder by applying at least one coating to the outer surface of said expanded bladder of an organic solvent solution of a composite mixture and at least partially drying and curing said composite in situ on said surface in the bladder's expanded condition, wherein said solution is comprised of an organic solvent for said composite and the composite mixture comprised essentially of

(1) an essentially linear hydroxyl terminated polyorganosiloxane; and

(2) an aminoorganosilane having the general formula:

$$R_nSiX_{(4-n)}$$

where n is 0 or 1; R is an alkyl radical having 1 to 4 carbon atoms; X is an amino radical having the general formula:

$$-NH_yR'_{(2-y)}$$

where y is 0 or 1; and R' is selected from at least one of saturated alkyl radicals having from 3 to 6 carbon atoms and a cyclohexyl radical;

(C) collapsing said bladder;

(D) allowing said base release coat to further dry and cure in situ on said bladder surface;

(E) Subsequently forming a lubricant topcoat over said cured base release coat by applying a coating of an emulsion of a lubricant composite thereover with said bladder being in either a collapsed or expanded condition and drying said emulsion, wherein said emulsion is comprised of an emulsion of at least one of:

(1) emulsion A as a polydimethylsiloxane fluid having a viscosity at 20°C in the range of 0,3 to 0.6 Pa.s 300 to 600 centipoise),

(2) emulsion B as of a hydroxyl terminated polydimethylsiloxane fluid having a viscosity at 25°C. in the range of 12 000 to 28 000 Pa.s (12 million to 28 million centipoise) and, optionally, a polydimethylsiloxane having a viscosity at 25°C in the range of 0,3 to 0,6 Pa.s (300 to 600 centipoise),

(3) emulsion C as a mixture of an hydroxyl terminated polydimethylsiloxane having a viscosity at 25°C. of 12 000 to 28 000 Pa.s (12 million to 28 million centipoise) and a methylhydrogen polysiloxane having a viscosity at 25°C. in the range of 0,005 to 0,05 ( 5 to 50 centipoise) and

(4) emulsion D as a mixture of a hydroxyl terminated polydimethylsiloxane having a viscosity at 25°C. in the range of 12 000 to 28 000 Pa.s (12 million to 28 million centipoise), a methyl hydrogenpolysiloxane having a viscosity at 25°C. in the range of 0,005 to 0,05 Pa.s (5 to 50 centipoise) and an acrylic copolymer derived from the polymerization of acrylonitrile and at least one of methyl acrylate and ethyl acrylate.

2. A cured butyl rubber expandable tire cure bladder characterized by having a cured base release coat on its outer surface and a lubricant topcoat thereover prepared by the method of claim 1.

3. The method of claim 1 characterized in that said bladder is expanded to at least about 20 percent of its normal collapsed condition for application of said base release coat, where R is selected from methyl and ethyl radicals, n is 1 and where said composite mixture for said release coat does not contain a polyorganosiloxane polymer.

4. A cured butyl rubber expandable tire cure bladder, said butyl having been cured with a resorcinol/formaldehyde resin, and characterized by having a cured base release coat on its outer surface and a lubricant topcoat thereover according to the method of claim 3, where R' is a butyl radical and where said hydroxyl terminated polyorganosiloxane is an hydroxyl terminated polydimethylsiloxane.

5. The method of claim 1 characterized in that said lubricant topcoat is applied as said emulsion A and where said polyorganosiloxane of said release composition has at least 50 siloxane units.

6. The method of claim 1 characterized in that said lubricant topcoat is applied as said emulsion B and where said polyorganosiloxane of said release composition has at least 50 siloxane units.

7. The method of claim 1 characterized in that said lubricant topcoat is applied as said emulsion C and where the lubricant composite cures in situ on said cure base release coat and where said polyorganosiloxane of said release composition has at least 50 siloxane units.

8. The method of claim 1 characterized in that said lubricant topcoat is applied as said emulsion D and where said lubricant composite cures in situ on said cured base release coat.

**9.** A cured butyl rubber expandable tire cure bladder prepared according to the method of claim 8 and characterized in that said polyorganosiloxane of said release composition has at least 50 siloxane units.

**10.** The bladder of claim 4 characterized in that said lubricant topcoat is applied as emulsion A.

**11.** The bladder of claim 4 characterized in that said lubricant topcoat is applied as emulsion B.

**12.** The bladder of claim 4 characterized in that said lubricant topcoat is applied as said emulsion C and where said lubricant composite cures in situ on said cured base release coat.

**13.** The bladder of claim 4 characterized in that said lubricant topcoat is applied as said emulsion D and where said lubricant composite cures in situ on said cured base release coat.

**14.** A method of curing a pneumatic rubber tire characterized by comprising the steps of:
(A) inserting a green, uncured rubber tire into a suitable open tire cure mold having an expandable cured butyl rubber tire cure bladder positioned therein,
(B) closing the mold and expanding said bladder by application of heated fluid to the bladder cavity to expand the bladder outwardly against the inner surface of the green tire to force said tire outward against the mold surface,
(C) curing the tire under conditions of heat and pressure, and
(D) opening the mold, collapsing the bladder by reducing the fluid pressure within its cavity and removing the shaped, cured tire from said mold.
wherein said bladder has a cured base release coat on its outer surface and a lubricant topcoat thereover prepared according to the method of claim 1.

**15.** A method of curing a pneumatic tire according to claim 14 characterized in that said bladder has a cured base release coat on its outer surface and a lubricant topcoat thereover prepared according to the method of claim 3.

**16.** A method of curing a pneumatic rubber tire according to claim 14 characterized in that said bladder has a cured base release coat on its outer surface and a lubricant topcoat thereover prepared according to method claim 5.

**17.** The method of curing a pneumatic rubber tire according to claim 14 characterized in that said bladder has a cured base release coat on its outer surface and a lubricant topcoat thereover prepared according to the method of claim 6.

**18.** A method of curing a pneumatic rubber tire according to claim 14 characterized in that said bladder has a cured base release coat on its outer surface and a lubricant topcoat thereover prepared according to the method of claim 7.

**19.** A method of curing a pneumatic rubber tire according to claim 14 characterized in that said bladder has a cured base release coat on its outer surface and a lubricant topcoat thereover prepared according to the method of claim 18.

**20.** A method of curing a pneumatic rubber tire according to claim 14 characterized in that said bladder has a cured base release coat on its outer surface and a lubricant topcoat thereover according to claim 10.

**21.** A method of curing a pneumatic rubber tire according to claim 14 characterized in that said bladder has a cured base release coat on its outer surface and a lubricant topcoat thereover according to claim 11.

**22.** A method of curing a pneumatic rubber tire according to claim 14 characterized in that said bladder has a cured base release coat on its outer surface and a lubricant topcoat thereover according to claim 12.

**23.** A method of curing a pneumatic rubber tire according to claim 14 characterized in that said bladder has a cured base release coat on its outer surface and a lubricant topcoat thereover according to claim 13.

**24.** A method of curing a pneumatic rubber tire according to claim 14 characterized in that said bladder has a cured base release coat on its outer surface and a lubricant topcoat thereover prepared according to the method of claim 1 where said lubricant topcoat is applied to said cured base release coat prior to curing a pneumatic tire therewith and subsequently intermittently thereafter only necessarily after at least about every 8th sequential repetitive tire cure cycle and where said subsequent lubricant topcoat is optionally alternatively applied by applying it to at least a portion of the inner surface of said uncured tire to be cured therewith.

25. A method of curing a pneumatic rubber tire according to claim 14 characterized in that said bladder has a cured base release coat on its outer surface and a lubricant topcoat thereover prepared according to the method of claim 5 where said lubricant topcoat is applied to said cured base release coat prior to curing a pneumatic tire therewith and subsequently intermittently thereafter only necessarily after at least about every 8th sequential repetitive tire cure cycle and where said subsequent lubricant topcoat is optionally alternatively applied by applying it to at least a portion of the inner surface of said uncured tire to be cured therewith.

26. A method of curing a pneumatic rubber tire according to claim 14 characterized in that said bladder has a cured base release coat on its outer surface and a lubricant topcoat thereover prepared according to the method of claim 6 where said lubricant topcoat is applied to said cured base release coat prior to curing a pneumatic tire therewith and subsequently intermittently thereafter only necessarily after at least about every 8th sequential tire cure cycle and where said subsequent lubricant topcoat is optionally alternatively applied by applying it to at least a portion of the inner surface of said uncured tire to be cured therewith.

27. A method of curing a pneumatic rubber tire according to claim 14 characterized in that said bladder has a cured base release coat on its outer surface and a lubricant topcoat thereover according to claim 7 where said lubricant topcoat is applied to said cured base release coat prior to curing a pneumatic tire therewith and subsequently intermittently thereafter only necessarily after at least about every 8th sequential tire cure cycle and where said subsequent lubricant topcoat is optionally alternatively applied by applying it to at least a portion of the inner surface of said uncured tire to be cured therewith.

28. A method of curing a pneumatic rubber tire according to claim 14 characterized in that said bladder has a cured base release coat on its outer surface and a bladder topcoat thereover according to claim 8 where said lubricant topcoat is applied to said cured base release coat prior to curing a pneumatic tire therewith and subsequently intermittently thereafter only necessarily after at least about every 8th sequential tire cure cycle and where said subsequent lubricant topcoat is optionally alternatively applied by applying it to at least a portion of the inner surface of said uncured tire to be cured therewith.

29. A method of curing a pneumatic rubber tire according to claim 14 characterized in that said bladder has a cured base release coat on its outer surface and a bladder topcoat thereover according to claim 10 where said lubricant topcoat is applied to said cured base release coat prior to curing a pneumatic tire therewith and subsequently intermittently thereafter only necessarily after at least about every 8th sequential tire cure cycle and where said subsequent lubricant topcoat is optionally alternatively applied by applying it to at least a portion of the inner surface of said uncured tire to be cured therewith.

30. A method of curing a pneumatic rubber tire according to claim 14 characterized in that said bladder has a cured base release coat on its outer surface and a bladder topcoat thereover according to claim 11 where said lubricant topcoat is applied to said cured base release coat prior to curing a pneumatic tire therewith and subsequently intermittently thereafter only necessarily after at least about every 8th sequential tire cure cycle and where said subsequent lubricant topcoat is optionally alternatively applied by applying it to at least a portion of the inner surface of said uncured tire to be cured therewith.

31. A method of curing a pneumatic rubber tire according to claim 14 characterized in that said bladder has a cured base release coat on its outer surface and a bladder topcoat thereover according to claim 12 where said lubricant topcoat is applied to said cured base release coat prior to curing a pneumatic tire therewith and subsequently intermittently thereafter only necessarily after at least about every 8th sequential tire cure cycle and where said subsequent lubricant topcoat is optionally alternatively applied by applying it to at least a portion of the inner surface of said uncured tire to be cured therewith.

32. A method of curing a pneumatic rubber tire according to claim 14 characterized in that said bladder has a cured base release coat on its outer surface and a bladder topcoat thereover according to claim 13 where said lubricant topcoat is applied to said cured base release coat prior to curing a pneumatic tire therewith and subsequently intermittently thereafter only necessarily after at least about every 8th sequential tire cure cycle and where said subsequent lubricant topcoat is optionally alternatively applied by applying it to at least a portion of the inner surface of said uncured tire to be cured therewith.

**Patentansprüche**

1. Verfahren zur Behandlung eines ausdehnbaren Reifenvulkanisierbalgs aus vulkanisiertem Butylkautschuk, dadurch gekennzeichnet, daß es umfaßt die Schritte

   (A) Ausdehnen des Balgs nach außen mindestens etwa 15 Prozent von seinem normalen, zusammengefallenen Zustand;

   (B) Bilden einer Formtrenn-Grundschicht auf dem Balg durch Auftragen mindestens einer Beschichtung aus einer organischen Lösungsmittel-Lösung einer Kompositmischung auf die äußere Oberfläche des ausgedehnten Balgs und mindestens teilweises Trocknen und Härten des Komposits in situ auf der Oberfläche im ausgedehnten Zustand des Balgs, worin die Lösung ein organisches Lösungsmittel für das Komposit umfaßt und die Kompositmischung im wesentlichen:

   (1) ein im wesentlichen lineares Polyorganosiloxan mit endständigem Hydroxyl; und

   (2) ein Aminoorganosilan mit der allgemeinen Formel:

   $$R_nSiX_{(4-n)},$$

   worin n 0 oder 1 ist; R ein Alkylrest mit 1 bis 4 Kohlenstoffatomen ist; X ein Aminorest mit der allgemeinen Formel:

   $$-NH_yR'_{(2-y)}$$

   ist, worin y 0 oder 1 ist; und R' aus mindestens einem von gesättigten Alkylresten mit 3 bis 6 Kohlenstoffatomen und einem Cyclohexylrest ausgewählt ist;

   umfaßt;

   (C) Zusammenfallenlassen des Balgs;

   (D) Weiter Trocknen- und Härtenlassen der Formtrenn-Grundschicht in situ auf der Balgoberfläche;

   (E) anschließend Bilden einer Gleitmittel-Deckschicht über der gehärteten Formtrenn-Grundschicht durch Auftragen einer Beschichtung aus einer Emulsion eines Gleitmittel-Komposits darüber, wobei der Balg entweder in einem zusammengefallenen oder ausgedehnten Zustand ist, und Trocknen der Emulsion, worin die Emulsion eine Emulsion aus mindestens einer von:

   (1) Emulsion A als ein Polydimethylsiloxan-Fluid mit einer Viskosität bei 20°C im Bereich von 0,3 bis 0,6 Pa.s (300 bis 600 Centipoise),

   (2) Emulsion B als von einem Polydimethylsiloxan-Fluid mit endständigem Hydroxyl mit einer Viskosität bei 25°C im Bereich von 12 000 bis 28 000 Pa.s (12 Millionen bis 28 Millionen Centipoise), und gegebenenfalls einem Polydimethylsiloxan mit einer Viskosität bei 25°C im Bereich von 0,3 bis 0,6 Pa.s (300 bis 600 Centipoise),

   (3) Emulsion C als einer Mischung von einem Polydimethylsiloxan mit endständigem Hydroxyl mit einer Viskosität bei 25°C von 12 000 bis 28 000 Pa.s (12 Millionen bis 28 Millionen Centipoise) und einem Methylwasserstoff-Polysiloxan mit einer Viskosität bei 25°C im Bereich von 0,005 bis 0,05 Pa.s (5 bis 50 Centipoise), und

   (4) Emulsion D als einer Mischung von einem Polydimethylsiloxan mit endständigem Hydroxyl mit einer Viskosität bei 25°C im Bereich von 12 000 bis 28 000 Pa.s (12 Millionen bis 28 Millionen Centipoise), einem Methylwasserstoff-Polysiloxan mit einer Viskosität bei 25°C im Bereich von 0,005 bis 0,05 Pa.s (5 bis 50 Centipoise), und einem Acryl-Copolymer, das von der Polymerisation von Acrylnitril und mindestens einem aus Methylacrylat und Ethylacrylat abgeleitet ist,

   umfaßt.

2. Ausdehnbarer Reifenvulkanisierbalg aus vulkanisiertem Butylkautschuk, dadurch gekennzeichnet, daß er eine nach dem Verfahren von Anspruch 1 hergestellte gehärtete Formtrenn-Grundschicht auf seiner äußeren Oberfläche und eine Gleitmittel-Deckschicht darüber aufweist.

3. Verfahren nach Anspruch 1, dadurch gekennzeichnet, daß der Balg zur Auftragung der Formtrenn-Grundschicht, worin R aus Methyl- und Ethylresten ausgewählt ist, n 1 ist, und worin die Kompositmischung für die Formtrenn-Schicht kein Polyorganosiloxan-Polymer enthält, auf mindestens etwa 20 Prozent seines normalen zusammengefallenen Zustands ausgedehnt wird.

4. Ausdehnbarer Reifenvulkanisierbalg aus vulkanisiertem Butylkautschuk, worin das Butyl mit einem Resorcin/Formaldehyd-Harz vulkanisiert worden ist, und der dadurch gekennzeichnet ist, daß er eine gehärtete Formtrenn-Grundschicht auf seiner äußeren Oberfläche und darüber eine Gleitmittel-Deckschicht nach dem Verfahren von Anspruch 3, worin R' ein Butylrest ist und worin das Polyorganosiloxan mit endständigem Hydroxyl ein Polydimethylsiloxan mit endständigem Hydroxyl ist, aufweist.

5. Verfahren nach Anspruch 1, dadurch gekennzeichnet, daß die Gleitmittel-Deckschicht als die Emulsion A aufgetragen wird und worin das Polyorganosiloxan der Formtrenn-Zusammensetzung mindestens 50 Siloxaneinheiten aufweist.

6. Verfahren nach Anspruch 1, dadurch gekennzeichnet, daß die Gleitmittel-Deckschicht als die Emulsion B aufgetragen wird und worin das Polyorganosiloxan der Formtrenn-Zusammensetzung mindestens 50 Siloxaneinheiten aufweist.

7. Verfahren nach Anspruch 1, dadurch gekennzeichnet, daß die Gleitmittel-Deckschicht als die Emulsion C aufgetragen wird und worin das Gleitmittel-Komposit in situ auf der gehärteten Formtrenn-Grundschicht härtet und worin das Polyorganosiloxan der Formtrenn-Zusammensetzung mindestens 50 Siloxaneinheiten aufweist.

8. Verfahren nach Anspruch 1, dadurch gekennzeichnet, daß die Gleitmittel-Deckschicht als die Emulsion D aufgetragen wird und worin das Gleitmittel-Komposit in situ auf der gehärteten Formtrenn-Grundschicht härtet.

9. Ausdehnbarer Reifenvulkanisierbalg aus vulkanisiertem Butylkautschuk, hergestellt nach dem Verfahren von Anspruch 8 und dadurch gekennzeichnet, daß das Polyorganosiloxan der Formtrenn-Zusammensetzung mindestens 50 Siloxaneinheiten aufweist.

10. Balg nach Anspruch 4, dadurch gekennzeichnet, daß die Gleitmittel-Deckschicht als Emulsion A aufgetragen wird.

11. Balg nach Anspruch 4, dadurch gekennzeichnet, daß die Gleitmittel-Deckschicht als Emulsion B aufgetragen wird.

12. Balg nach Anspruch 4, dadurch gekennzeichnet, daß die Gleitmittel-Deckschicht als Emulsion C aufgetragen wird, und worin das Gleitmittel-Komposit in situ auf der gehärteten Formtrenn-Grundschicht härtet.

13. Balg nach Anspruch 4, dadurch gekennzeichnet, daß die Gleitmittel-Deckschicht als Emulsion D aufgetragen wird, und worin das Gleitmittel-Komposit in situ auf der gehärteten Formtrenn-Grundschicht härtet.

14. Verfahren zur Vulkanisation eines Gummi-Luftreifens, dadurch gekennzeichnet, daß es umfaßt die Schritte:
   (A) Einsetzen eines grünen, unvulkanisierten Kautschukreifens in eine geeignete offene Reifenvulkanisationsform mit einem darin positionierten ausdehnbaren Reifenvulkanisierbalg aus vulkanisiertem Butylkautschuk,
   (B) Schließen der Form und Ausdehnen des Balgs durch Anwendung von erwärmtem Fluid auf den Balghohlraum, um den Balg nach außen gegen die innere Oberfläche des Reifenrohlings auszudehnen, um den Reifen nach außen gegen die Formoberfläche zu drücken,
   (C) Vulkanisieren des Reifens unter Wärme- und Druckbedingungen, und
   (D) Öffnen der Form, Zusammenfallenlassen des Balgs durch Verminderung des Fluid-Drucks innerhalb seines Hohlraums und Entnehmen des geformten, vulkanisierten Reifens aus der Form;
   worin besagter Balg eine gehärtete Formtrenn-Grundschicht auf seiner äußeren Oberfläche und darüber eine Gleitmittel-Deckschicht aufweist, hergestellt nach dem Verfahren von Anspruch 1.

15. Verfahren zur Vulkanisation eines Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, hergestellt nach dem Verfahren von Anspruch 3.

16. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, hergestellt nach dem Verfahren von Anspruch 5.

17. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, hergestellt nach dem Verfahren von Anspruch 6.

18. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, hergestellt nach dem Verfahren von Anspruch 7.

19. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, hergestellt nach dem Verfahren von Anspruch 18.

20. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, gemäß Anspruch 10.

21. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, gemäß Anspruch 11.

22. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, gemäß Anspruch 12.

23. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, gemäß Anspruch 13.

24. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, nach dem Verfahren von Anspruch 1 hergestellt, worin die Gleitmittel-Deckschicht auf die gehärtete Formtrenn-Grundschicht aufgetragen wird, bevor ein Luftreifen damit vulkanisiert wird, und anschließend intermittierend danach notwendigerweise nur nach mindestens etwa jedem achten aufeinanderfolgenden sich wiederholenden Reifen-Vulkanisationszyklus, und worin die anschließende Gleitmittel-Deckschicht gegebenenfalls alternativ aufgetragen wird, indem man sie auf mindestens einen Teil der inneren Oberfläche des unvulkanisierten Reifens, der damit vulkanisiert werden soll, aufträgt.

25. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, nach dem Verfahren von Anspruch 5 hergestellt, worin die Gleitmittel-Deckschicht auf die gehärtete Formtrenn-Grundschicht aufgetragen wird, bevor ein Luftreifen damit vulkanisiert wird, und anschließend intermittierend danach notwendigerweise nur nach mindestens etwa jedem achten aufeinanderfolgenden sich wiederholenden Reifen-Vulkanisationszyklus, und worin die anschließende Gleitmittel-Deckschicht gegebenenfalls alternativ aufgetragen wird, indem man sie auf mindestens einen Teil der inneren Oberfläche des unvulkanisierten Reifens, der damit vulkanisiert werden soll, aufträgt.

26. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, nach dem Verfahren von Anspruch 6 hergestellt, worin die Gleitmittel-Deckschicht auf die gehärtete Formtrenn-Grundschicht aufgetragen wird, bevor ein Luftreifen damit vulkanisiert wird, und anschließend intermittierend danach notwendigerweise nur nach mindestens etwa jedem achten aufeinanderfolgenden Reifen-Vulkanisationszyklus, und worin die anschließende Gleitmittel-Deckschicht gegebenenfalls alternativ aufgetragen wird, indem man sie auf mindestens einen Teil der inneren Oberfläche des unvulkanisierten Reifens, der damit vulkanisiert werden soll, aufträgt.

27. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Gleitmittel-Deckschicht aufweist, gemäß Anspruch 7, worin die Gleitmittel-Deckschicht auf die gehärtete Formtrenn-Grundschicht aufgetragen wird, bevor ein Luftreifen damit vulkanisiert wird, und anschließend intermittierend danach notwendigerweise nur nach mindestens etwa jedem achten aufeinanderfolgenden Reifen-Vulkanisationszyklus, und worin die anschließende Gleitmittel-Deckschicht gegebenenfalls alternativ aufgetragen wird, indem man sie auf mindestens einen Teil der inneren Oberfläche des unvulkanisierten Reifens, der damit vulkanisiert werden soll, aufträgt.

28. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Balg-Deckschicht aufweist, gemäß Anspruch 8, worin die Gleitmittel-Deckschicht auf die gehärtete Formtrenn-Grundschicht aufgetragen wird, bevor ein Luftreifen damit vulkanisiert wird, und anschließend intermittierend danach notwendigerweise nur nach mindestens etwa jedem achten aufeinanderfolgenden Reifen-Vulkanisationszyklus, und worin die anschließende Gleitmittel-Deckschicht gegebenenfalls alternativ aufgetragen wird, indem man sie auf mindestens einen Teil der inneren Oberfläche des unvulkanisierten Reifens, der damit vulkanisiert werden soll, aufträgt.

29. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Balg-Deckschicht aufweist, gemäß Anspruch 10, worin die Gleitmittel-Deckschicht auf die gehärtete Formtrenn-Grundschicht aufgetragen wird, bevor ein Luftreifen damit vulkanisiert wird, und anschließend intermittierend danach notwendigerweise nur nach mindestens etwa jedem achten aufeinanderfolgenden Reifen-Vulkanisationszyklus, und worin die anschließende Gleitmittel-Deckschicht gegebenenfalls alternativ aufgetragen wird, indem man sie auf mindestens einen Teil der inneren Oberfläche des unvulkanisierten Reifens, der damit vulkanisiert werden soll, aufträgt.

30. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Balg-Deckschicht aufweist, gemäß Anspruch 11, worin die Gleitmittel-Deckschicht auf die gehärtete Formtrenn-Grundschicht aufgetragen wird, bevor ein Luftreifen damit vulkanisiert wird, und anschließend intermittierend danach notwendigerweise nur nach mindestens etwa jedem achten aufeinanderfolgenden Reifen-Vulkanisationszyklus, und worin die anschließende Gleitmittel-Deckschicht gegebenenfalls alternativ aufgetragen wird, indem man sie auf mindestens einen Teil der inneren Oberfläche des unvulkanisierten Reifens, der damit vulkanisiert werden soll, aufträgt.

31. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Balg-Deckschicht aufweist, gemäß Anspruch 12, worin die Gleitmittel-Deckschicht auf die gehärtete Formtrenn-Grundschicht aufgetragen wird, bevor ein Luftreifen damit vulkanisiert wird, und anschließend intermittierend danach notwendigerweise nur nach mindestens etwa jedem achten aufeinanderfolgenden Reifen-Vulkanisationszyklus, und worin die anschließende Gleitmittel-Deckschicht gegebenenfalls alternativ aufgetragen wird, indem man sie auf mindestens einen Teil der inneren Oberfläche des unvulkanisierten Reifens, der damit vulkanisiert werden soll, aufträgt.

32. Verfahren zur Vulkanisation eines Gummi-Luftreifens nach Anspruch 14, dadurch gekennzeichnet, daß der Balg eine gehärtete Formtrenn-Grundschicht auf seiner äußeren Oberfläche und darüber eine Balg-Deckschicht aufweist, gemäß Anspruch 13, worin die Gleitmittel-Deckschicht auf die gehärtete Formtrenn-Grundschicht aufgetragen wird, bevor ein Luftreifen damit vulkanisiert wird, und anschließend intermittierend danach notwendigerweise nur nach mindestens etwa jedem achten aufeinanderfolgenden Reifen-Vulkanisationszyklus, und worin die anschließende Gleitmittel-Deckschicht gegebenenfalls alternativ aufgetragen wird, indem man sie auf mindestens einen Teil der inneren Oberfläche des unvulkanisierten Reifens, der damit vulkanisiert werden soll, aufträgt.

## Revendications

1. Procédé de traitement d'une vessie en caoutchouc butyle vulcanisé apte à se dilater pour la vulcanisation de bandages pneumatiques, caractérisé en ce qu'il comprend les étapes consistant à :
   (A) dilater ladite vessie vers l'extérieur au moins sur environ quinze pour cent par rapport à son état normal aplati,

(B) former une couche de séparation de base sur ladite vessie en appliquant, sur la surface externe de ladite vessie dilatée, au moins un revêtement d'une solution d'un mélange composite dans un solvant organique et en séchant au moins partiellement et en vulcanisant ledit composite in situ sur ladite surface à l'état dilaté de la vessie, ladite solution comprenant un solvant organique destiné audit composite et le mélange composite comprenant essentiellement

(1) un polyorganosiloxane essentiellement linéaire à terminaison hydroxyle, et

(2) un amino-organosilane répondant à la formule générale

$$R_nSiX_{(4-n)}$$

dans laquelle n est égal à 0 ou 1, R représente un radical alkyle contenant de 1 à 4 atomes de carbone, et X représente un radical amino répondant à la formule générale :

$$-NH_yR'_{(2-y)}$$

où y est égal à 0 ou 1, et R' est choisi parmi au moins un radical alkyle saturé contenant de 3 à 6 atomes de carbone et un radical cyclohexyle;

(C) aplatir ladite vessie;

(D) laisser ladite couche de séparation de base sécher ultérieurement et se vulcaniser in situ sur ladite surface de vessie;

(E) former ensuite une couche de finition de lubrifiant par-dessus ladite couche de séparation de base vulcanisée en appliquant un revêtement d'une émulsion d'un composite de lubrifiant pardessus cette dernière, ladite vessie se trouvant soit à l'état aplati, soit à l'état dilaté, et sécher ladite émulsion, ladite émulsion comprenant une émulsion parmi au moins une des suivantes :

(1) une émulsion A sous forme d'un fluide de polydiméthylsiloxane ayant une viscosité à 20°C dans le domaine de 0,3 à 0,6 Pa.s (300 à 600 centipoises),

(2) une émulsion B sous forme d'un fluide de polydiméthylsiloxane à terminaison hydroxyle ayant une viscosité à 25°C dans le domaine de 12.000 à 28.000 Pa.s (12 millions à 28 millions de centipoises) et éventuellement un polydiméthylsiloxane ayant une viscosité à 25°C dans le domaine de 0,3 à 0,6 Pa.s (300 à 600 centipoises),

(3) une émulsion C sous forme d'un mélange d'un polydiméthylsiloxane à terminaison hydroxyle ayant une viscosité à 25°C de 12.000 à 28.000 Pa.s (12 millions à 28 millions de centipoises) et un hydrogénopolysiloxane méthylé ayant une viscosité à 25°C dans le domaine de 0,005 à 0,05 Pa.s (5 à 50 centipoises), et

(4) une émulsion D sous forme d'un mélange d'un polydiméthylsiloxane à terminaison hydroxyle ayant une viscosité à 25°C dans le domaine de 12.000 à 28.000 Pa.s (12 millions à 28 millions de centipoises), d'un hydrogénopolysiloxane méthylé ayant une viscosité à 25°C dans le domaine de 0,005 à 0,05 Pa.s (5 à 50 centipoises) et d'un copolymère acrylique dérivé de la polymérisation d'acrylonitrile et au moins d'acrylate de méthyle ou d'acrylate d'éthyle.

2. Vessie en caoutchouc butyle vulcanisé apte à se dilater pour la vulcanisation de bandages pneumatiques, caractérisée par le fait qu'elle possède une couche de séparation de base vulcanisée sur sa surface externe et une couche de finition de lubrifiant par-dessus cette dernière, préparées par le procédé selon la revendication 1.

3. Procédé selon la revendication 1, caractérisé en ce que ladite vessie est dilatée à concurrence d'au moins environ 20 pour cent de son état normal aplati pour l'application de ladite couche de séparation de base, R étant choisi parmi des radicaux méthyle et éthyle, n étant égal à 1 et, dans lequel le mélange composite pour ladite couche de séparation ne contient pas de polymère de polyorganosiloxane.

4. Vessie en caoutchouc butyle vulcanisé apte à se dilater pour la vulcanisation de bandages pneumatiques, ledit caoutchouc butyle ayant été vulcanisé avec du résorcinol/résine formaldéhyde, et caractérisée par le fait qu'elle possède une couche de séparation de base vulcanisée sur sa surface externe et une couche de finition de lubrifiant par-dessus cette dernière selon le procédé de la revendication 3, R' représentant un radical butyle, et dans lequel ledit polyorganopolysiloxane à terminaison hydroxyle est un polydiméthylsiloxane à terminaison hydroxyle.

5. Procédé selon la revendication 1, caractérisé en ce que ladite couche de finition de lubrifiant est appliquée sous forme de ladite émulsion A, et dans lequel ledit polyorganosiloxane de ladite composition de séparation possède au moins 50 unités siloxane.

6. Procédé selon la revendication 1, caractérisé en ce que ladite couche de finition de lubrifiant est appliquée sous forme de ladite émulsion B, et dans lequel ledit polyorganosiloxane de ladite composition de séparation possède au moins 50 unités siloxane.

7. Procédé selon la revendication 1, caractérisé en ce que ladite couche de finition de lubrifiant est appliquée sous forme de ladite émulsion C, et dans lequel le composite de lubrifiant est vulcanisé in situ sur ladite couche de séparation de base vulcanisée, et dans lequel ledit polyorganosiloxane de ladite composition de séparation possède au moins 50 unités siloxane.

8. Procédé selon la revendication 1, caractérisé en ce que ladite couche de finition de lubrifiant est appliquée sous forme de ladite émulsion D, et dans lequel ledit composite de lubrifiant est vulcanisé in situ sur ladite couche de séparation de base vulcanisée.

9. Vessie en caoutchouc butyle vulcanisé apte à se dilater pour la vulcanisation de bandages pneumatiques préparée conformément au procédé selon la revendication 8 et caractérisée en ce que ledit polyorganosiloxane de ladite composition de séparation comporte au moins 50 unités siloxane.

10. Vessie selon la revendication 4, caractérisée en ce que ladite couche de finition de lubrifiant est appliquée sous forme de l'émulsion A.

11. Vessie selon la revendication 4, caractérisée en ce que ladite couche de finition de lubrifiant est appliquée sous forme de l'émulsion B.

12. Vessie selon la revendication 4, caractérisée en ce que ladite couche de finition de lubrifiant est appliquée sous forme de ladite émulsion C, et dans laquelle ledit composite de lubrifiant est vulcanisé in situ sur ladite couche de séparation de base vulcanisée.

13. Vessie selon la revendication 4, caractérisée en ce que ladite couche de finition de lubrifiant est appliquée sous forme de ladite émulsion D, et dans laquelle ledit composite de lubrifiant est vulcanisé in situ sur ladite couche de séparation de base vulcanisée.

14. Procédé de vulcanisation d'un bandage pneumatique en caoutchouc, caractérisé par le fait qu'il comprend les étapes consistant à :
   (A) insérer un bandage pneumatique cru en caoutchouc non vulcanisé dans un moule de vulcanisation ouvert approprié pour des bandages pneumatiques comportant une vessie en caoutchouc butyle vulcanisé apte à se dilater pour la vulcanisation de bandages pneumatiques positionnée en son sein,
   (B) fermer le moule et dilater ladite vessie par application d'un fluide chauffé dans la cavité de vessie pour dilater la vessie vers l'extérieur contre la surface interne du bandage pneumatique cru pour forcer ledit bandage pneumatique vers l'extérieur contre la surface du moule,
   (C) vulcaniser le bandage pneumatique dans des conditions de chaleur et de pression, et
   (D) ouvrir le moule, aplatir la vessie en réduisant la pression de fluide régnant dans sa cavité et retirer dudit moule ledit bandage pneumatique façonné vulcanisé,
   dans lequel ladite vessie comporte une couche de séparation de base vulcanisée sur sa surface externe, ainsi qu'une couche de finition de lubrifiant par-dessus cette dernière, préparées conformément au procédé selon la revendication 1.

15. Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 3.

16. Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 5.

17. Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 6.

**18.** Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 7.

**19.** Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 8.

**20.** Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière selon la revendication 10.

**21.** Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière selon la revendication 11 .

**22.** Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière selon la revendication 12.

**23.** Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière selon la revendication 13.

**24.** Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 1, dans lequel on applique ladite couche de finition de lubrifiant sur ladite couche de séparation de base vulcanisée avant de vulcaniser le bandage pneumatique avec cette dernière, et par la suite, par intermittence, après cette application, uniquement en cas de nécessité, après au moins environ chaque 8ème cycle répétitif séquentiel de vulcanisation du bandage pneumatique, et dans lequel on applique facultativement en variante ladite couche ultérieure de finition de lubrifiant, en l'appliquant sur au moins une portion de la surface interne dudit bandage pneumatique non vulcanisé qui doit être vulcanisé avec elle.

**25.** Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 5, dans lequel on applique ladite couche de finition de lubrifiant sur ladite couche de séparation de base vulcanisée avant de vulcaniser le bandage pneumatique avec cette dernière, et par la suite, par intermittence, après cette application, uniquement en cas de nécessité, après au moins environ chaque 8ème cycle répétitif séquentiel de vulcanisation du bandage pneumatique, et dans lequel on applique facultativement en variante ladite couche ultérieure de finition de lubrifiant, en l'appliquant sur au moins une portion de la surface interne dudit bandage pneumatique non vulcanisé qui doit être vulcanisé avec elle.

**26.** Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 6, dans lequel on applique ladite couche de finition de lubrifiant sur ladite couche de séparation de base vulcanisée avant de vulcaniser le bandage pneumatique avec cette dernière, et par la suite, par intermittence, après cette application, uniquement en cas de nécessité, après au moins environ chaque 8ème cycle répétitif séquentiel de vulcanisation du bandage pneumatique, et dans lequel on applique facultativement en variante ladite couche ultérieure de finition de lubrifiant, en l'appliquant sur au moins une portion de la surface interne dudit bandage pneumatique non vulcanisé qui doit être vulcanisé avec elle.

27. Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 7, dans lequel on applique ladite couche de finition de lubrifiant sur ladite couche de séparation de base vulcanisée avant de vulcaniser le bandage pneumatique avec cette dernière, et par la suite, par intermittence, après cette application, uniquement en cas de nécessité, après au moins environ chaque 8ème cycle répétitif séquentiel de vulcanisation du bandage pneumatique, et dans lequel on applique facultativement en variante ladite couche ultérieure de finition de lubrifiant, en l'appliquant sur au moins une portion de la surface interne dudit bandage pneumatique non vulcanisé qui doit être vulcanisé avec elle.

28. Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 8, dans lequel on applique ladite couche de finition de lubrifiant sur ladite couche de séparation de base vulcanisée avant de vulcaniser le bandage pneumatique avec cette dernière, et par la suite, par intermittence, après cette application, uniquement en cas de nécessité, après au moins environ chaque 8ème cycle répétitif séquentiel de vulcanisation du bandage pneumatique, et dans lequel on applique facultativement en variante ladite couche ultérieure de finition de lubrifiant, en l'appliquant sur au moins une portion de la surface interne dudit bandage pneumatique non vulcanisé qui doit être vulcanisé avec elle.

29. Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 10, dans lequel on applique ladite couche de finition de lubrifiant sur ladite couche de séparation de base vulcanisée avant de vulcaniser le bandage pneumatique avec cette dernière, et par la suite, par intermittence, après cette application, uniquement en cas de nécessité, après au moins environ chaque 8ème cycle répétitif séquentiel de vulcanisation du bandage pneumatique, et dans lequel on applique facultativement en variante ladite couche ultérieure de finition de lubrifiant, en l'appliquant sur au moins une portion de la surface interne dudit bandage pneumatique non vulcanisé qui doit être vulcanisé avec elle.

30. Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 11, dans lequel on applique ladite couche de finition de lubrifiant sur ladite couche de séparation de base vulcanisée avant de vulcaniser le bandage pneumatique avec cette dernière, et par la suite, par intermittence, après cette application, uniquement en cas de nécessité, après au moins environ chaque 8ème cycle répétitif séquentiel de vulcanisation du bandage pneumatique, et dans lequel on applique facultativement en variante ladite couche ultérieure de finition de lubrifiant, en l'appliquant sur au moins une portion de la surface interne dudit bandage pneumatique non vulcanisé qui doit être vulcanisé avec elle.

31. Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la revendication 12, dans lequel on applique ladite couche de finition de lubrifiant sur ladite couche de séparation de base vulcanisée avant de vulcaniser le bandage pneumatique avec cette dernière, et par la suite, par intermittence, après cette application, uniquement en cas de nécessité, après au moins environ chaque 8ème cycle répétitif séquentiel de vulcanisation du bandage pneumatique, et dans lequel on applique facultativement en variante ladite couche ultérieure de finition de lubrifiant, en l'appliquant sur au moins une portion de la surface interne dudit bandage pneumatique non vulcanisé qui doit être vulcanisé avec elle.

32. Procédé de vulcanisation d'un bandage pneumatique selon la revendication 14, caractérisé en ce que ladite vessie comporte une couche de séparation de base vulcanisée sur sa surface externe, ainsi qu'une couche de finition de lubrifiant par-dessus cette dernière, préparées conformément au procédé selon la

EP 0 385 919 B1

revendication 13, dans lequel on applique ladite couche de finition de lubrifiant sur ladite couche de séparation de base vulcanisée avant de vulcaniser le bandage pneumatique avec cette dernière, et par la suite, par intermittence, après cette application, uniquement en cas de nécessité, après au moins environ chaque 8ème cycle répétitif séquentiel de vulcanisation du bandage pneumatique, et dans lequel on applique facultativement en variante ladite couche ultérieure de finition de lubrifiant, en l'appliquant sur au moins une portion de la surface interne dudit bandage pneumatique non vulcanisé qui doit être vulcanisé avec elle.

21